(19) Europäisches Patentamt
European Patent Office
Office européen des brevets

(11) **EP 2 904 895 B1**

(12) **EUROPÄISCHE PATENTSCHRIFT**

(45) Veröffentlichungstag und Bekanntmachung des Hinweises auf die Patenterteilung:
**28.06.2017   Patentblatt 2017/26**

(51) Int Cl.:
*A01G 9/02* *(2006.01)*      *E04C 1/39* *(2006.01)*

(21) Anmeldenummer: **15000381.2**

(22) Anmeldetag: **10.02.2015**

(54) **System zur vertikalen Begrünung**

System for vertical greening

Système pour façades vertes

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **10.02.2014   DE 202014001085 U**
**18.03.2014   DE 102014003730**
**21.03.2014   DE 102014004270**

(43) Veröffentlichungstag der Anmeldung:
**12.08.2015   Patentblatt 2015/33**

(73) Patentinhaber:
• **Adler, Berthold**
**45329 Essen (DE)**
• **Fraunhofer-Gesellschaft zur Förderung der angewandten Forschung e.V.**
**80686 München (DE)**

(72) Erfinder:
• **Wack, Holger**
**44137 Dortmund (DE)**
• **Adler, Berthold**
**45329 Essen (DE)**

(56) Entgegenhaltungen:
EP-A1- 1 803 697      DE-A1- 3 816 866
DE-U1- 9 218 070      FR-A1- 2 928 671
JP-A- 2002 305 962      JP-A- 2003 325 052
US-A1- 2005 044 781

**Beschreibung**

Die vorliegende Erfindung betrifft ein System für eine vorzugsweise vertikale Begrünung gemäß dem Oberbegriff des Anspruchs 1.

Die vertikale Begrünung von Bauwerken rückt zunehmend ins Blickfeld von Architekten, Planern und Bauherren. Durch die zunehmende Urbanisierung besteht zum einen der Wunsch grüne Flächen als gestalterisches Element zu verwenden, zum anderen verspricht man sich von der Begrünung positive Einflüsse auf das Mikroklima sowie eine Schall- und Feinstaubreduktion.

Die CN 102726243 A offenbart eine Wand, die auf der Innenseite horizontale Rillen aufweist, durch die jeweils eine Bewässerungsleitung geführt ist. Von jeder Bewässerungsleitung aus gehen Röhrchen durch in der Wand vorhandene Kanäle. Die Röhrchen enden in auf der Außenseite aufgesetzten Pflanzenaufwuchskörpern. Auf der Außenseite der Wand münden die Röhrchen in feinporigen Düsen, um die Pflanzenaufwuchskörper zu befeuchten. Dieses System ist aufwendig und anfällig. Insbesondere ist nachteilig, dass die Düsen leicht verstopfen und der Montageaufwand hoch ist.

Aus der US 2005/0044781 A1 ist ein Bauelement für eine vorzugsweise vertikale Begrünung bekannt, mit einer Vorderseite, die eine Aufnahme für Pflanzsubstrat aufweist, wobei das Bauelement aus einem wassersaugenden Werkstoff hergestellt ist.

Zur Ausbildung eines Systemverbundes mit einer Mehrzahl solcher Bauelemente weisen die Bauelemente Bohrungen zur Aufnahme von Verbindungsstangen und Verbindungsstiften auf. Im verbundenen Zustand der Bauelemente sind die Bohrungen von den Verbindungsstangen oder -stiften ausgefüllt.

Das Dokument DE 38 16 866 A1 offenbart ein Begrünungselement, bei dem mit Humus oder Pflanzerde befüllte Taschen oder Körbchen mit einem Wasserspeicherelement in Verbindung stehen. Das Wasserspeicherelement kann von einer porösen oder miteinander verbundene Hohlräume zur Aufnahme und Speicherung von Wasser aufweisender Substanz sein. Das Wasserspeicherelement kann ein in den Taschen oder Körbchen angeordneter Wasserbehälter sein, dessen dem mit der Pflanzerde gefüllten Raum zugewandte Wandung porös und wasserdurchlässig ist. Beispielsweise kann der Behälter aus Porobeton bestehen. Eine andere Gestaltung sieht vor, dass der Wasserbehälter als Rohr ausgebildet ist, wobei das Rohr großporig oder mit Wasseraustrittsbohrungen versehen sein kann.

Das Dokument JP 2003 325052 A offenbart einen Pflanzbehälter zur Befestigung an einer Gebäudewand, der ein Wasserreservoir und einen Pflanzbereich aufweist. Zwischen dem Wasserreservoir und dem Pflanzbereich ist eine Trennplatte vorgesehen, wobei die Wasserversorgung des Pflanzbereiches über Bohrungen in der Trennplatte erfolgt. Die Wasserableitung aus dem Wasserreservoir und die Wasserüberleitung in ein benachbartes Wasserreservoir erfolgt über Rohre, die den Pflanzbehälter durchsetzen. Das Dokument EP 2 341 187 A2 offenbart ein System gemäß des Oberbegriffs des Anspruchs 1. Der vorliegenden Erfindung liegt die Aufgabe zugrunde, ein System vorzuschlagen, das einfach und kostengünstig herstellbar und einsetzbar ist und/oder eine möglichst extensive (d. h. ohne aufwendige Pflegemaßnahmen) vertikale Begrünung, also nicht erdbodengebundene Begrünung, ermöglicht.

Die obige Aufgabe wird durch ein System gemäß Anspruch 1 gelöst. Vorteilhafte Weiterbildungen sind Gegenstand der Unteransprüche.

Ein vorschlagsgemäßes Bauelement zeichnet sich gemäß einem Aspekt der vorliegenden Erfindung dadurch aus, dass das Bauelement aus einem wassersaugenden Werkstoff hergestellt ist oder besteht. Hierdurch kann die Begrünung bzw. ein in einer Aufnahme des Bauelements aufgenommenes Pflanzsubstrat sehr einfach mit Wasser versorgt werden. Dies ermöglicht einen sehr einfachen und kostengünstigen Aufbau. Des Weiteren werden beim Stand der Technik auftretende Probleme, insbesondere Verstopfungen bei Düsen, vermieden.

Gemäß einem anderen Aspekt der vorliegenden Erfindung zeichnet sich das vorschlagsgemäße Bauelement dadurch aus, dass es vorzugsweise aus einem wasserdurchlässigen Werkstoff hergestellt ist oder besteht und dass das Bauelement vorzugsweise mindestens einen Bewässerungskanal zur vorzugsweise ausschließlich indirekten Bewässerung der Begrünung durch den Werkstoff hindurch aufweist. Dies ist wiederum einem einfachen und kostengünstigen Aufbau zuträglich. Außerdem wird eine sehr einfache Montage ermöglicht.

Unter einer "indirekten" Bewässerung im Sinne der Erfindung ist zu verstehen, dass es lediglich durch das Wasserleitvermögen des Werkstoffs, aus dem das Bauelement besteht, insbesondere durch Kapillarkräfte und/oder unter Schwerkraft teinfluss, zu einem Wassertransport im Werkstoff kommt, der eine Bewässerung der Begrünung durch den Werkstoff hindurch zulässt.

Der Flüssigkeitstransport im Werkstoff der Bauelemente erfolgt vorzugsweise sowohl aufgrund von Schwerkraft - durch Makroporen des Elementwerkstoffes und über Kontaktflächen benachbarter Elemente hinweg - als auch aufgrund von Kapillarkräften. Die kapillare Wasseraufnahme läuft freiwillig im hygroskopischen Feuchtebereich ab. Das kapillare Saugen erfolgt in Mikro- und Kapillarporen, deren Radius 0,1 $\mu$m bis 1 mm betragen kann und die im Werkstoff vorhanden sind. Die Bewertung der kapillaren Saugfähigkeit bzw. der Wasseraufnahmekapazität des Werkstoffs erfolgt mit dem Wasseraufnahmekoeffizienten w, der in Abhängigkeit von der aufgenommenen Flüssigkeitsmasse m, der Grundfläche A und der Zeit t gemäß Gleichung 1 wie folgt definiert ist:

$$w = \frac{m}{A\sqrt{t}} \qquad \text{(Gleichung 1)}$$

Zur Bestimmung des Wasseraufnahmekoeffizienten w wird der zu untersuchende Werkstoff des Bauelementes mit der Grundfläche A in Wasser (Flüssigkeit) eingetaucht. Das Gewicht des Werkstoffs wird in definierten Zeitabständen bestimmt und daraus wird die Masse m des aufgesaugten Wassers in Abhängigkeit von der Zeit t erhalten. Nach Auftragung der grundflächenbezogenen Masse m A$^{-1}$ über der Wurzel der Zeit t wird der Wasseraufnahmekoeffizient w aus der Steigung der Kurve im linearen Anfangsbereich erhalten. Die Bestimmung der Wasseraufnahmekapazität bzw. die Bestimmung des Wasseraufnahmekoeffizienten w bei teilweisem Eintauchen erfolgt gemäß ISO 15148: 2002 (deutsche Fassung EN ISO 15148: 2002, Ausgabedatum: 2003-03).

Der Wert des Wasseraufnahmekoeffizienten w des Werkstoffs, aus dem das Bauelement besteht, liegt vorzugsweise im Bereich zwischen 1,0 und 60 kg m$^{-2}$ h$^{-0,5}$, weiter vorzugsweise im Bereich von 1,5 bis 30 kg m$^{-2}$ h$^{-0,5}$, besonders bevorzugt im Bereich von 2,0 bis 10 kg m$^{-2}$ h$^{-0,5}$, insbesondere im Bereich von 2,0 bis 3,5 kg m$^{-2}$ h$^{-0,5}$. Damit wird eine ausreichende lediglich indirekte Bewässerung im Sinne der Erfindung ermöglicht.

Es ist nicht zwingend erforderlich und vorzugsweise auch nicht vorgesehen, dass eine Wasserversorgung des Bauelementes über wenigstens eine separate Leitung oder wenigstens ein separates Rohr erfolgt, die in den Werkstoff des Bauelementes eingebracht sind. Werden Leitungen oder Rohre als Bewässerungskanäle im Bauelement vorgesehen, erfolgt der Wasseraustritt in den Werkstoff des Bauelementes über Öffnungen in der Leitung oder dem Rohr, die während der Lebensdauer des Bauelementes verstopfen können. Damit kann es zu einer Gefährdung der Wasserversorgung kommen. Eine Reinigung der Leitungen oder Rohre in einem Verbund mehrerer Bauelemente ist in der Regel nicht oder nur mit erheblichem Aufwand möglich. Auch die Herstellung und das Zusammensetzen der Bauelemente zu einem Verbund werden durch separate Leitungen oder separate Rohre als Bewässerungskanäle erschwert.

Bei einer bevorzugten Ausführungsform der Erfindung ist daher die Verwendung von separaten Leitungen oder separaten Rohren zur Wasserversorgung der Bauelemente nicht vorgesehen. Stattdessen kann das Bauelement wenigstens einen Bewässerungskanal oder lediglich wenigstens einen Bewässerungskanal aufweisen, der vorzugsweise durch den Werkstoff des Bauelementes selbst gebildet wird und über den Wasser dem Bauelement zuführbar und/oder im Bauelement verteilbar ist. Der Bewässerungskanal wird hierbei nach außen durch den Werkstoff des Bauelementes begrenzt. Der lichte Querschnitt des Bewässerungskanals kann im Zentimeterbereich liegen und zwischen 1 bis 5 cm betragen. Beispielsweise kann ein Bewässerungskanal durch eine Bohrung im Werkstoff oder eine Werkstoffausnehmung gebildet sein, die bereits bei der Herstellung des erfindungsgemäßen Bauelementes in das Bauelement eingebracht werden kann. Wasser wird über den Bewässerungskanal in das Bauelement eingebracht und "versickert" dort bzw. wird aufgesaugt und durch Kapillarkräfte und/oder aufgrund von Schwerkraft zur indirekten Bewässerung der Begrünung in den Bereich der Begrünung weitergeleitet.

Der Bewässerungskanal ist vorzugsweise vom Ort der Begrünung räumlich getrennt und mündet nicht an dem Ort der Begrünung. Zur Wasserversorgung der Begrünung wird Wasser in den Bewässerungskanal eingeleitet, das in dem angrenzenden Werkstoff des Bauelementes versickert bzw. von dem Werkstoff aufgesaugt wird und dann aufgrund der oben beschriebenen Triebkräfte zum Ort der Begrünung gelangt. Der Bewässerungskanal ist somit in den Werkstoff des Bauelementes "eingebettet", aber vom Ort der Begrünung über einen Werkstoffabschnitt bestimmter Werkstoffdicke von vorzugsweise mehr als 2 cm, insbesondere mehr als 5 cm bis 10 cm, räumlich getrennt. Dies trägt zu einer sehr gleichmäßigen Wasserversorgung der Begrünung bei und hilft, Wasserverluste oder eine übermäßige Befeuchtung der Begrünung zu verhindern.

Ein vorschlagsgemäßes System zeichnet sich gemäß einem Aspekt der vorliegenden Erfindung dadurch aus, dass es aus den genannten Bauelementen aufgebaut ist, insbesondere in der Art einer Mauer, beispielsweise zur Schalldämmung. Dies gestattet einen sehr einfachen und kostengünstigen Aufbau.

Gemäß einem anderen Aspekt der vorliegenden Erfindung zeichnet sich das vorschlagsgemäße System dadurch aus, dass es aus einem wassersaugenden und wasserdurchlässigen, vorzugsweise mineralischen Werkstoff hergestellt oder aufgebaut ist, wobei horizontale und/oder vertikale Bewässerungskanäle in dem System und insbesondere in dem Werkstoff zur indirekten Bewässerung der Begrünung durch den Werkstoff hindurch gebildet werden. Dies gestattet wiederum einen einfachen und kostengünstigen Aufbau.

Besonders bevorzugt wird für das Bauelement bzw. System als wassersaugender Werkstoff ein mineralischer Werkstoff, insbesondere Kalksandstein, eingesetzt.

Vorzugsweise bildet das Bauelement bzw. System ein Fassadenelement.

Vorzugsweise bildet das Bauelement bzw. System einen Feinstaubfilter bzw. ein Feinstaubsorptionsmodul.

Vorzugsweise wird das Bauelement bzw. System zur Nutzpflanzenzucht, beispielsweise von Gemüse, Kräutern o. dgl., eingesetzt.

Vorzugsweise wird das Bauelement bzw. System in Kombination mit Methoden des Urban Farming (kleinräumige, gärtnerische Nutzung städtischer Flächen) eingesetzt.

Vorzugsweise weist das Bauelement bzw. System innen und/oder außen strömungstechnisch optimierte Strukturen zur verbesserten Luftströmungsführung auf, insbesondere um eine verbesserte Feinstaubsorption, eine verbesserte Flüssigkeitsaufnahme bei Regenereignissen und/oder einen verbesserten Schallschutz zu erreichen.

Mehrere Bauelemente können auch vorab oder erst vor Ort zu einem größeren Modul bzw. dem vorschlagsgemäßen System zusammengefügt bzw. zusammengebaut werden.

Die vorgenannten Aspekte und die sich aus der weiteren Beschreibung ergebenden Aspekte der vorliegenden Erfindung können unabhängig voneinander, aber auch in beliebiger Kombination realisiert werden.

Weitere Vorteile, Merkmale, Eigenschaften und Aspekte der vorliegenden Erfindung ergeben sich aus den Ansprüchen und der folgenden Beschreibung einer bevorzugten Ausführungsform anhand der Zeichnung. Es zeigt:

Fig. 1    eine perspektivische Ansicht eines vorschlagsgemäßen Systems mit mehreren vorschlagsgemäßen Bauelementen;

Fig. 2    eine Seitenansicht des Systems;

Fig. 3    eine perspektivische Ansicht eines vorschlagsgemäßen Bauelements; und

Fig. 4    einen schematischen Schnitt eines vorschlagsgemäßen Bauelements gemäß einer etwas anderen modifizierten Ausführung.

In den teilweise nicht maßstabsgerechten, nur schematischen Figuren werden für gleiche oder ähnliche Teile dieselben Bezugszeichen verwendet, wobei entsprechende oder vergleichbare Eigenschaften und Vorteile erreicht werden, auch wenn eine wiederholte Beschreibung weggelassen ist.

Generell sind räumliche Angaben, wie vertikal oder horizontal, auf den normalen Gebrauchszustand bzw. Einbauzustand bzw. die übliche Verwendung bezogen.

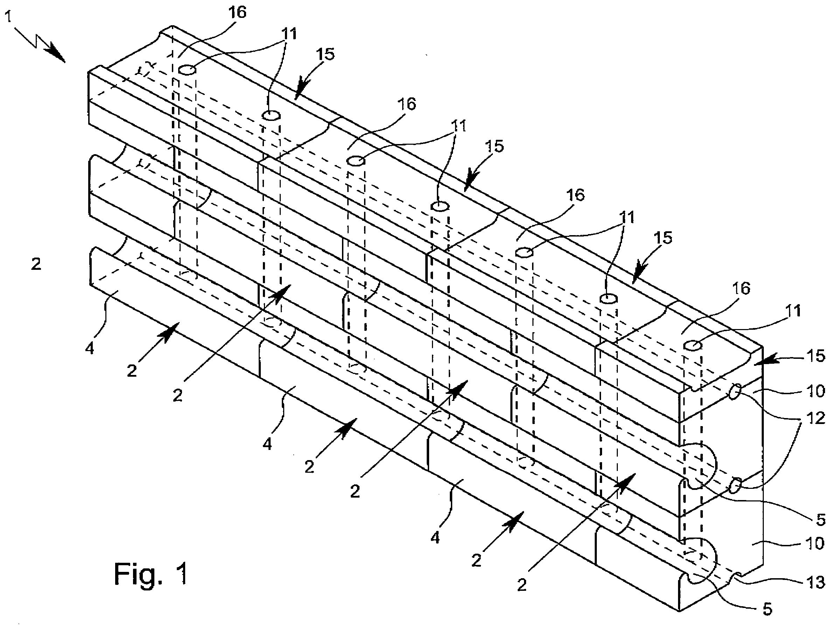

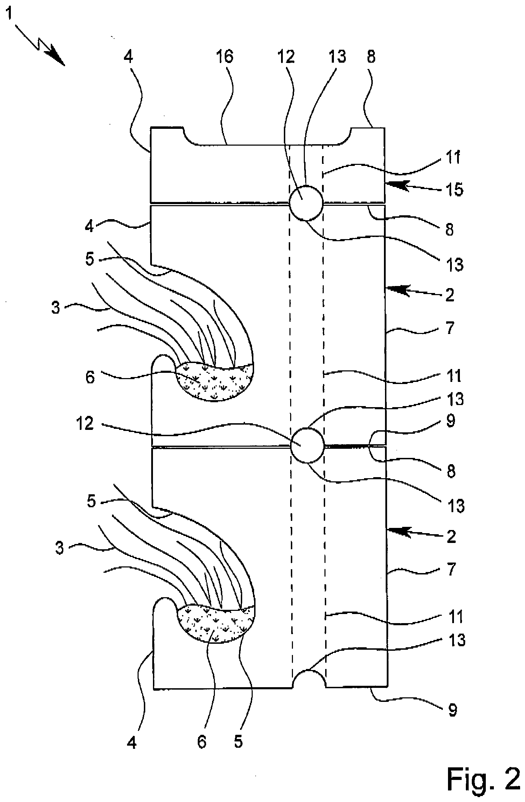

Fig. 1 zeigt in einer schematischen, perspektivischen Ansicht ein vorschlagsgemäßes System 1 vorzugsweise aufgebaut aus mehreren vorschlagsgemäßen Bauelementen 2. Fig. 2 zeigt eine Seitenansicht des Systems 1.

Das System 1 ist vorzugsweise aus mehreren, insbesondere gleichen oder gleichartigen Bauelementen 2, besonders bevorzugt in der Art einer Mauer, aufgebaut.

Die Bauelemente 2 bilden vorzugsweise Module bzw. Steine zum Aufbau des Systems 1. Vorzugsweise weisen die Bauelemente 2 unterschiedliche Längen auf, beispielsweise die volle und die halbe Länge, um einen üblichen Verbund (Mauerverbund) bilden zu können.

Vorzugsweise sind die Bauelemente 2 in mehreren Reihen übereinander angeordnet.

Optional können die Bauelemente 2, insbesondere in der oberen Reihe, oberseitig abgedeckt sein. Hierauf wird später noch näher eingegangen.

Aufgrund der Gleichartigkeit der Bauelemente 2 wird nachfolgend immer nur auf den bevorzugten Aufbau eines Bauelements 2 näher eingegangen.

Das System 1 bzw. Bauelement 2 dient der vorzugsweise vertikalen Begrünung 3, wie in Fig. 2 angedeutet.

Besonders bevorzugt handelt es sich bei der Begrünung 3 um grasartige oder sonstige Pflanzen, vorzugsweise Blumen o. dgl., wie schematisch in Fig. 2 angedeutet, ggf. aber auch um Moose, Kräuter, Sedum, etc.

Das System 1 bzw. Bauelement 2 weist vorzugsweise eine Aufnahme 5 für Pflanzsubstrat 6, wie Erde, Sand o. dgl., auf, insbesondere an der (vertikalen) Vorderseite 4. Beim Darstellungsbeispiel ist die Aufnahme 5 zur Vorderseite 4 hin offen oder zugänglich und/oder vorzugsweise als Einbuchtung oder Vertiefung und/oder taschenartig bzw. rinnenartig ausgebildet, insbesondere so, dass eine nach oben offene Aufnahmerinne für Pflanzsubstrat 6 gebildet wird. Jedoch sind auch andere Gestaltungen möglich.

Vorzugsweise ist die Aufnahme 5 in das Bauelement 2 eingeformt oder daran angeformt.

Das Bauelement 2 ist vorzugsweise einstückig ausgebildet.

Vorzugsweise verläuft die Aufnahme 5 horizontal und/oder ist durchgängig über die gesamte Länge des Bauelements 2 bzw. Systems 1 durchgängig ausgebildet.

Alternativ kann jedes Bauelement 2 auch ein oder mehrere separate Aufnahmen 5 aufweisen, so dass die Aufnahmen 5 in benachbarten Bauelementen 2 nicht miteinander in Verbindung stehen.

Beim Darstellungsbeispiel springen die Aufnahmen 5 gegenüber der Vorderseite 4 bzw. Außenkontur vorzugsweise zurück. Jedoch ist es grundsätzlich auch möglich, dass diese ausgehend von der Vorderseite 4 nach vorne bzw. außen vorspringen, auch wenn dies weniger bevorzugt ist.

Vorzugsweise bildet jede Reihe der Bauelemente 2 beim Darstellungsbeispiel eine durchgehende Aufnahme 5 für Pflanzsubstrat 6 und damit für die Begrünung 3.

Da die Begrünung 3 an der vertikalen Seite bzw. Vorderseite 4 des Bauelements 2 bzw. des Systems 1 angeordnet ist, handelt es sich um eine vertikale Begrünung 3 im Sinne der vorliegenden Erfindung.

Zusätzlich oder alternativ zu den im Pflanzsubstrat 6 bzw. in den Aufnahmen 5 wachsenden Pflanzen können auch sonstige Pflanzen, insbesondere Moose, (direkt) auf der freien bzw. außen liegenden Oberfläche des jeweiligen Bauelements 2, insbesondere auf den zumindest im Wesentlichen vertikalen Flächen oder Abschnitten der Vorderseite 4 wachsen und ebenfalls eine vorzugsweise vertikale Begrünung 3 im Sinne der vorliegenden Erfindung bilden. Hierfür sind die Aufnahmen 5 und ein Pflanzsubstrat 6 nicht erforderlich. Bedarfsweise können die Aufnahmen 5 also auch entfallen.

Die Rückseite 7 des Systems 1 bzw. Bauelements 2 ist vorzugsweise glatt bzw. eben ausgebildet.

Vorzugsweise sind bzw. ist die Oberseite 8 und/oder Unterseite 9 des Bauelements 2 zumindest im Wesentlichen glatt bzw. eben ausgebildet.

Die Stirnseiten 10 des Bauelements 2 sind vorzugsweise flach bzw. eben ausgebildet.

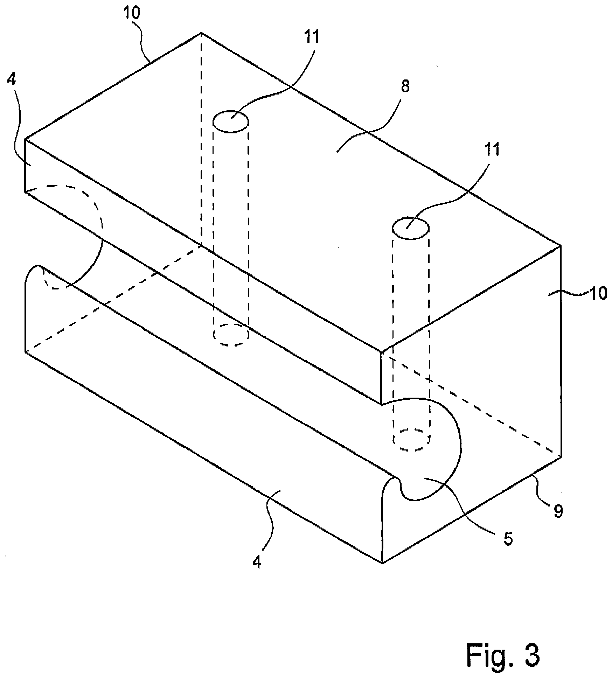

Das Bauelement 2 weist vorzugsweise eine zumindest im Wesentlichen quaderförmige Außenkontur auf, wie insbesondere in Fig. 3 angedeutet, die eine perspektivische Ansicht eines einzelnen Bauelements 2 zeigt. Beim Darstellungsbeispiel weicht das Bauelement 2 insbesondere im Wesentlichen nur auf der Vorderseite 4 von der Bauform dadurch ab, dass hier die Aufnahme 5, insbesondere in Form einer Vertiefung oder Einbuchtung, gebildet ist, also die Vorderseite 4 unterbricht.

Das System 1 bzw. Bauelement 2 weist vorzugsweise eine zumindest im Wesentlichen glatte oder ebene Vorderseite 4 - mit Ausnahme der Öffnung der Aufnahme(n) 5 zur Vorderseite 4 hin - auf oder bildet eine solche. Alternativ oder zusätzlich können jedoch auch sonstige Strukturen auf der Oberfläche bzw. Vorderseite 4, insbesondere zur Optimierung des Schallschutzes, der Luftströmung, der Feinstaubsorption oder dgl., gebildet sein.

Die Aufnahme 5 ist vorzugsweise durchgängig zwischen den beiden Quer- bzw. Stirnseiten 10 des Bauelements 2 ausgebildet. Dementsprechend sind dann die Stirnseiten 10 auch partiell aufgebrochen bzw. ausgenommen.

Das System 1 bzw. Bauelement 2 weist vorzugsweise mindestens einen Bewässerungskanal 11 auf, der insbesondere - zumindest im Wesentlichen - vertikal verläuft.

Besonders bevorzugt weist das Bauelement 2 mehrere, hier zwei Bewässerungskanäle 11 auf, wie insbesondere in Fig. 3 angedeutet.

Das vorschlagsgemäße System 1 weist vorzugsweise mehrere Bewässerungskanäle 11 auf.

Die Bewässerungskanäle 11 verlaufen vorzugsweise parallel zueinander und/oder in einer Ebene, vorzugsweise in einer Vertikalebene, insbesondere wenn die Bauelemente 2 bzw. das System 1 eine gerade Wand oder Mauer bilden bzw. bildet.

Der Bewässerungskanal 11 ist vorzugsweise als Durchgangsloch im jeweiligen Bauelement 2 ausgeführt. Er streckt sich also vorzugsweise von der Oberseite 8 bis zur Unterseite 9 und ist vorzugsweise beidseitig offen.

Der Bewässerungskanal 11 ist vorzugsweise in das Bauelement 2 eingeformt bzw. in diesem oder von diesem bzw. von dem Werkstoff, aus dem das Bauelement 2 hergestellt ist oder besteht, gebildet.

Der Bewässerungskanal 11 ist vorzugsweise in der hinteren Hälfte des Bauelements 2 angeordnet.

Der Bewässerungskanal 11 ist vorzugsweise zu der Aufnahme 5 beabstandet angeordnet, insbesondere so, dass keine unmittelbare Verbindung besteht, der Bewässerungskanal 11 die Aufnahme 5 also nicht schneidet.

Das System 1 bzw. Bauelement 2 weist auf oder bildet vorzugsweise mindestens einen weiteren Bewässerungskanal 12, der insbesondere horizontal verläuft.

Der Bewässerungskanal 12 verläuft vorzugsweise innerhalb des Systems 1 bzw. Bauelements 2.

Der Bewässerungskanal 12 verläuft vorzugsweise parallel zur Vorderseite 4.

Besonders bevorzugt bildet das Bauelement 2 auf der Oberseite 8 und/oder Unterseite 9 einen Bewässerungskanal 12. Besonders bevorzugt weist das Bauelement 2 an oder in der Oberseite 8 und/oder Unterseite 9 eine Halbrinne 13, wie insbesondere in Fig. 2 angedeutet. In Fig. 3 ist diese aus Vereinfachungsgründen weggelassen.

Die Halbrinne 13 wird vorzugsweise durch das darüber oder darunter liegende Bauelement 2, also die entsprechende Unterseite 9 oder Oberseite 8 und/oder eine korrespondierende, darin gebildete Halbrinne 13 des benachbarten Bauelements 2, zur Bildung des jeweiligen Bewässerungskanals 12 abgedeckt. Dies gestattet einen einfachen und kostengünstigen Aufbau.

Alternativ kann der Bewässerungskanal 12 jedoch beispielsweise auch innerhalb des Bauelements 2, also zwischen der Oberseite 8 und Unterseite 9 gebildet sein.

Der Bewässerungskanal 12 ist vorzugsweise beidseitig offen bzw. als Durchgangsöffnung oder -loch ausgebildet. Insbesondere erstreckt sich der Bewässerungskanal 12 durchgehend von einer Stirnseite 10 bis zur anderen Stirnseite 10 des jeweiligen Bauelements 2 bzw. des Systems 1.

Vorzugsweise weist das System 1 bzw. Bauelement 2 mehrere, vorzugsweise horizontale Bewässerungskanäle 12 auf. Die Bewässerungskanäle 12 verlaufen vorzugsweise parallel zueinander und/oder in einer Vertikalebene.

Besonders bevorzugt verlaufen die Bewässerungskanäle 11 und Bewässerungskanäle 12 in einer gemeinsamen Ebene, insbesondere Vertikalebene.

Besonders bevorzugt schneidet mindestens ein Bewässerungskanal 11 mehrere Bewässerungskanäle 12.

Besonders bevorzugt schneidet mindestens ein Bewässerungskanal 12 mehrere Bewässerungskanäle 11.

Die Bewässerungskanäle 11 und 12 sind vorzugsweise miteinander fluidisch verbunden und/oder bilden besonders bevorzugt ein Bewässerungssystem zur indirekten Bewässerung, das also nicht direkt mit den Aufnahmen 5 bzw. der Vorderseite 4 des Systems 1 bzw. jeweiligen Bauelements 2 in Kontakt steht.

Die Bewässerungskanäle 11 sind beim Darstellungsbeispiel endseitig vorzugsweise offen, insbesondere oben und/oder unten. Bei Bedarf können die Bewässerungskanäle 11 jedoch auch verschlossen sein oder werden, beispielsweise mittels eines nicht dargestellten Stopfens, einer Abdeckung o. dgl. Beispielsweise können die bei den Fig. 1 und 2 in der unteren Reihe angeordneten Bauelemente 2 in einen nicht dargestellten Mörtel o. dgl. gesetzt sein, wodurch die Bewässerungskanäle 11 unten verschlossen sein können.

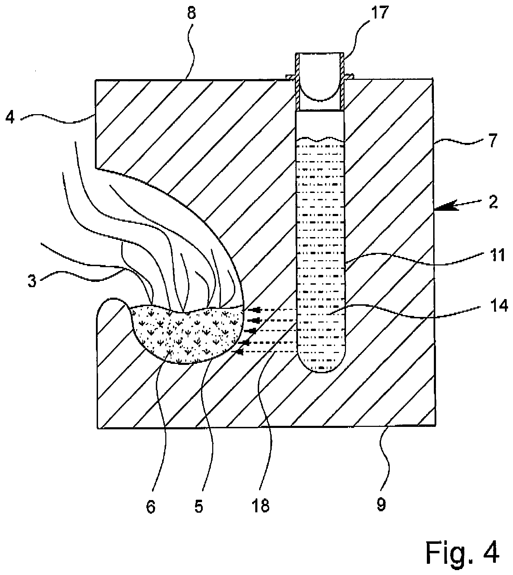

Fig. 4 zeigt in einem schematischen Schnitt das Bauelement 2 gemäß einer etwas modifizierten Ausführung. Hier ist der Bewässerungskanal 11 nicht als Durchgangsöffnung bzw. Durchgangsloch, sondern vorzugsweise als Sackloch ausgebildet und dadurch nach unten hin verschlossen bzw. nur zur Oberseite 8 hin geöffnet. Hierdurch kann auf einfache Weise ein Rückstau oder eine Aufnahme von Wasser 14 zur Bewässerung im Bewässerungskanal 11 erreicht werden, wie in Fig. 4 schematisch angedeutet.

Vorzugsweise kann das Bauelement 2 mit nach unten hin geschlossenem Bewässerungskanal 11 bzw. nach unten hin geschlossenen Bewässerungskanälen 11 im der unteren Reihe bei einem mehrreihigen Aufbau bzw. System 1, wie in Fig. 1 beispielshaft dargestellt, aber auch unabhängig davon je nach Einsatzzweck eingesetzt werden.

Das System 1 bzw. Bewässerungssystem weist vorzugsweise eine geeignete Wasserzuführung, beispielsweise eine Zuführung von Umgebungswasser, Regenwasser o. dgl., auf.

Das System 1 bzw. die obenliegenden Bauelemente 2 weist bzw. weisen vorzugsweise oben eine Abdeckung, insbesondere Abdeckelemente 15 und/oder eine Rinne 16, zum Sammeln und/oder Zuführen von Wasser, auf, wie in Fig. 1 und 2 beispielhaft dargestellt. Besonders bevorzugt ist die Rinne 16 durch die Abdeckelemente 15 und/oder von diesen bzw. in deren Oberseite 8 gebildet. Jedoch sind auch andere konstruktive Lösungen möglich.

Die Bauelemente 2 werden vorzugsweise in der Art einer Mauer übereinander und zusammengesetzt, insbesondere um eine Wand, beispielsweise eine Vorwand, Fassade, Schallschutzwand o. dgl., zu bilden, wie bereits erwähnt.

Besonders bevorzugt können die Bauelemente 2, insbesondere auf ihren aufeinander aufliegenden Oberseiten 8 und Unterseiten 9 miteinander verklebt bzw. über einem Dünnmörtelbett miteinander verbunden werden.

Alternativ oder zusätzlich kann jedoch auch jede sonstige Verbindungsmasse und/oder eine Dichtungslage oder Dichtungsmasse, besonders bevorzugt zur Abdichtung des Bewässerungssystems bzw. der Bewässerungskanäle 11, 12 dazwischen eingebracht werden.

Entsprechendes gilt für die Verbindung der Abdeckelemente 15 mit den darunter liegenden Bauelementen 2.

Alternativ oder zusätzlich kann auch ein Verbindungselement 17, wie beispielhaft in Fig. 4 angedeutet, zum Halten, Ausrichten, Verbinden und/oder Abdichten zwischen zwei benachbarten bzw. aneinander liegenden bzw. übereinander liegenden Bauelementen 2 angeordnet werden. Beispielsweise wird das Verbindungselement 17 von außen in einen Bewässerungskanal 11 oder 12 eingesteckt bzw. eingelegt, wobei ein gewisser Teil über die Seitenfläche, hier die Oberseite 8, vorragt und in den sich anschließenden Bewässerungskanal 11, 12 des benachbarten Bauelements 2 (nicht in Fig. 4 nicht dargestellt) eingreift. Jedoch sind hier auch andere konstruktive Lösungen und andere Anordnungen möglich.

Beispielsweise kann das Element 17 auch als Eingießtülle oder -hilfe ausgebildet seinoder verwendet werden, insbesondere um das Zuführen von Wasser, beispielsweise mittels einer Gießkanne, zu erleichtern.

Das Bauelement 2 kann bedarfsweise auch ein nicht dargestelltes Griffloch o. dgl. aufweisen. Das Griffloch kann fluidisch direkt mit den Bewässerungskanälen 11 und/oder 12 in Verbindung stehen und/oder durch einen Verbindungskanal 11 und/oder 12 gebildet sein. Alternativ kann das Griffloch auch fluidisch von den Bewässerungskanälen 11 bzw. 12 durch den Werkstoff getrennt sein. Das Griffloch ist besonders bevorzugt nach oben hin offen und/oder erlaubt ein Eingreifen von oben. Jedoch sind auch andere konstruktive Lösungen möglich.

Vorzugsweise ist vorgesehen, dass das System 1 bzw. Bauelement 2 zumindest im Wesentlichen nur aus einem homogenen Werkstoff hergestellt ist oder besteht.

Vorzugsweise ist das System 1 bzw. Bauelement 2 zumindest im Wesentlichen, insbesondere ausschließlich aus einem wassersaugenden und/oder wasserdurchlässigen Werkstoff hergestellt bzw. aufgebaut. Jedoch ist es grundsätzlich auch möglich, mehrere derartige Werkstoffe oder andere Werkstoffe mit dem wassersaugenden bzw. wasserdurchlässigen Werkstoff zu kombinieren.

Der wassersaugende Werkstoff hat den Vorteil, dass die Begrünung 3 selbsttätig bzw. indirekt mit Wasser 14 versorgt bzw. das Pflanzsubstrat 6 besser feucht gehalten werden kann.

Weiter kann der wassersaugende bzw. wasserdurchlässige Werkstoff eine indirekte Bewässerung der Begrünung 3 bzw. Wasserversorgung des Pflanzsubstrats 6 durch den Werkstoff hindurch bewirken, so kann das Wasser 14 nämlich insbesondere vom nächstliegenden Bewässerungskanal 11 durch den Werkstoff hindurch zu der benachbarten Aufnahme 5 diffundieren bzw. in das Pflanzsubstrat 6 eindringen kann. Dies ist in Fig. 4 schematisch durch gestrichelte Pfeile 18 angedeutet.

Besonders bevorzugt ist der Bewässerungskanal 11 näher an der Aufnahme 5 als an der Rückseite 7 angeordnet und/oder bildet die Wandung zwischen dem Bewässerungskanal 11 und der Aufnahme 5 einen Bereich besonders geringer Wandungsdicke, um eine gute Diffusion zu ermöglichen bzw. zu erleichtern.

Alternativ oder zusätzlich zu der vorschlagsgemäßen indirekten Bewässerung über Bewässerungskanäle 11, 12 kann auch eine vorschlagsgemäße indirekte Bewässerung dadurch erfolgen, dass Wasser durch den saugenden Werkstoff in dem Bauelement 2 bzw. System 1 gehalten wird und/oder aufsteigt, um den gewünschten Bewässerungseffekt der Begrünung 3 bzw. des Pflanzsubstrats 6 zu erreichen.

Der Werkstoff ist vorzugsweise homogen.

Der Werkstoff ist vorzugsweise saugfähig und flüssigkeitsspeichernd.

Der Werkstoff ist vorzugsweise mineralisch.

Der Werkstoff ist vorzugsweise aus Kalksandstein, Ziegel, Porenbeton und/oder Blähton hergestellt oder gebildet. Besonders bevorzugt wird Kalksandstein eingesetzt.

Durch Wahl einer geeigneten Werkzeuggeometrie kann ohne Modifikationen des etablierten Herstellungsverfahrens eine einfache und kostengünstige Serienfertigung der Bauelemente 2 aus Kalksandstein erfolgen. Bei den Bauelementen 2 handelt es sich dann vorzugsweise um Mauersteine bzw. Kalksandsteine.

Bei Bedarf können Additive, wie Wasserbindungs- und/oder Dünnungskomponenten, insbesondere aufgemahlener Bims, Lavagestein, supraabsorbierende Polymere etc., in die Werkstoffmischung bzw. Kalksandsteingrundmischung eingebracht werden.

Alternativ oder zusätzlich können aber auch Werkstoffe, wie Holz, Kunststoff, Metall o. dgl., eingesetzt werden, die dann entsprechend saugfähig und flüssigkeitsspeichernd ausgerüstet werden.

Vorzugsweise ist das System 1, das Bauelement 2, der Werkstoff und/oder die Vorderseite 4 eingefärbt oder farbig, besonders bevorzugt bräunlich oder grünlich oder gefleckt, ausgebildet.

Die Bauelemente 2 können in einfacher und im Bauprozess etablierter Weise zu Wänden und Großflächenelementen, also zu vorschlagsgemäßen Systemen 1, verbaut werden.

Die eingebrachten Strukturen bzw. Aufnahmen 5 können sehr einfach mit Pflanzsubstrat 6, wie Erdreich, Rasentragschichten, Sand o. dgl., gefüllt werden.

Das Pflanzsubstrat 6 kann Pflanzensamen, vorzugsweise Grassamen, enthalten, um in kurzer Zeit einen Begrünungserfolg zu erzielen.

Die Einbringung des Pflanzsubstrats 6 kann je nach Bedarf in das einzelne Bauelement 2 vor dem Aufbau des Systems 1 oder nach Aufbau des Systems 1 erfolgen.

Das Pflanzsubstrat 6 kann bei Bedarf auch durch Anspritzen auf- bzw. eingebracht werden.

Das Pfilanzsubstrat 6 kann an die gewünschten bzw. verwendeten Pflanzen bzw. an die gewünschte Begrünung 3 bzw. an den gewünschten Begrünungstyp angepasst werden.

Alternativ oder zusätzlich kann das Pflanzsubstrat 6 auch Additive bzw. Wasserbindungs- und/oder Düngungskomponenten, beispielsweise auch supraabsorbierende Polymere o. dgl., enthalten.

Insbesondere bei der Begrünung mit Gräsern wird ein schneller Begrünungserfolg, beispielsweise innerhalb von zwei bis drei Wochen, erzielt, und das durch das Gras bereitgestellte Mikroklima ermöglicht die Ansiedlung weiterer Pflanzen. Insbesondre wird die Ansiedlung von Moosen unterstützt, und so kann im Laufe der Zeit eine bisher noch nicht realisierte und einfache vertikale Begrünung mit Moosen erzielt werden.

**Bezugszeichenliste:**

1 System
2 Bauelement
3 Begrünung
4 Vorderseite
5 Aufnahme
6 Pfilanzsubstrat
7 Rückseite
8 Oberseite
9 Unterseite
10 Stirnseite
11 vertikaler Bewässerungskanal
12 horizontaler Bewässerungskanal
13 Halbrinne
14 Wasser
15 Abdeckelement

16 Rinne
17 Verbindungselement
18 Diffusion

**Patentansprüche**

1. System (1) für eine vorzugsweise vertikale Begrünung (3), aufgebaut aus als Klinker oder Mauersteine ausgebildeten Bauelementen (2), wobei jedes Bauelement eine Vorderseite (4) mit einer Aufnahme (5) für Pflanzsubstrat (6) aufweist und wobei die Bauelemente (2) aus einem wassersaugenden und wasserdurchlässigen Werkstoff bestehen, wobei sich über mehrere benachbarte Bauelemente erstreckende horizontale und/oder vertikale Bewässerungskanäle aus dem Werkstoff in den Bauelementen gebildet sind, wobei Wasser den Bauelementen über die Bewässerungskanäle zuführbar und in den Bauelementen verteilbar ist, **dadurch gekennzeichnet, dass** die Bewässerungskanäle (11, 12) zur indirekten Bewässerung der Begrünung (3) durch den Werkstoff hindurch gebildet sind und wobei die Bewässerungskanäle (11, 12) durch Bohrungen oder Werkstoffausnehmungen gebildet sind.

2. System nach Anspruch 1, **dadurch gekennzeichnet, dass** das System (1) eine Schallschutzmauer, ein Fassadenelement und/oder einen Feinstaubfilter bzw. eine Feinstaubsorptionsmodul bildet.

3. System nach Anspruch 1 oder 2, **dadurch gekennzeichnet, dass** das System (1) oben eine Abdeckung (15) und/oder Rinne (16) zur Zuführung von Wasser (14) zu den Bewässerungskanälen (11, 12) aufweist.

4. System nach einem der Ansprüche 1 bis 3, **dadurch gekennzeichnet, dass** das System (1) zur Nutzpflanzenzucht, insbesondere von Gemüse, Kräutern o. dgl., und/oder in Kombination mit Methoden des Urban Faring eingesetzt wird bzw. einsetzbar ist.

5. System nach einem der vorhergehenden Ansprüche, **dadurch gekennzeichnet, dass** der Werkstoff mineralisch ist.

6. System nach einem der vorhergehenden Ansprüche, **dadurch gekennzeichnet, dass** der Werkstoff Kalksandstein, Ziegel, ein Porenbeton, Blähton, Bims und/oder Lava ist oder enthält.

7. System nach einem der voranstehenden Ansprüche, **dadurch gekennzeichnet, dass** die Aufnahme (5) taschenartig oder rinnenartig ausgebildet ist und/oder im Gebrauchszustand horizontal verläuft.

8. System nach einem der voranstehenden Ansprüche, **dadurch gekennzeichnet, dass** das Bauelement (2) eine zumindest im Wesentlichen quaderförmige Außenkontur aufweist.

9. System nach einem der voranstehenden Ansprüche, **dadurch gekennzeichnet, dass** mindestens ein oder der Bewässerungskanal (11) im Gebrauchszustand vertikal verläuft.

10. System nach einem der voranstehenden Ansprüche, **dadurch gekennzeichnet, dass** das Bauelement (2) mindestens einen horizontalen Bewässerungskanal (12) aufweist oder bildet, insbesondere wobei der horizontale Bewässerungskanal (12) mehrere vertikale Bewässerungskanäle (11) verbindet.

11. System nach einem der voranstehenden Ansprüche, **dadurch gekennzeichnet, dass** ein Bewässerungskanal (12) auf einer Oberseite (8) und/oder Unterseite (9) des Bauelements (2) angeordnet oder gebildet ist und/oder dass der Bewässerungskanal (12) durch eine Halbrinne (13) im Bauelement (2) gebildet ist.

12. System nach einem der voranstehenden Ansprüche, **dadurch gekennzeichnet, dass** das Bauelement (2) ein Fassadenmodul und/oder Fassadenelement ist oder bildet.

**Claims**

1. A system (1) for a preferably vertical greening (3), constructed from structural elements (2) in the form of clinker or bricks, wherein each structural element comprises a front side (4) with a recess (5) for planting substrate (6), and wherein the structural elements (2) consist of a water-absorbent and water-permeable material, wherein horizontal and/or vertical irrigation channels, which extend over several adjacent structural elements, are formed from the material in the structural elements, wherein water may be supplied to the structural elements via the irrigation channels and may be distributed in the structural elements
**characterized in that**
the irrigation channels (11, 12) are formed for the indirect irrigation of the greening (3) through the material, and wherein the irrigation channels (11, 12) are formed by bores or material recesses.

2. System according to claim 1,
**characterized in that**
the system (1) forms a soundproofing wall, a facade element and/or a fine dust filter or a fine dust sorption module.

3. System according to claim 1 or 2,
**characterized in that**
the system (1) has a cover (15) and/or gutter (16) at the top for feeding water (14) to the irrigation channels (11, 12).

4. System according to one of claims 1 to 3,
**characterized in that**
the system (1) is or may be used for crop plant cultivation, in particular vegetables, herbs or the like, and/or in combination with methods of urban farming.

5. System according to one of the preceding claims,
**characterized in that**
the material is mineral.

6. System according to one of the preceding claims,
**characterized in that**
the material is or contains sand-lime brick, bricks, a porous concrete, expanded clay, pumice and/or lava.

7. System according to one of the preceding claims,
**characterized in that**
the recess (5) is pocket-like or gutter-like in form and/or runs horizontally when in service.

8. System according to one of the preceding claims,
**characterized in that**
the structural element (2) comprises an at least essentially cube-shaped outer contour.

9. System according to one of the preceding claims,
**characterized in that**
at least one irrigation channel (11) runs vertically when in service.

10. System according to one of the preceding claims,
**characterized in that**
the structural element (2) comprises or forms at least one horizontal irrigation channel (12), in particular wherein the horizontal irrigation channel (12) connects several vertical irrigation channels (11).

11. System according to one of the preceding claims,
**characterized in that**
an irrigation channel (12) is arranged or formed on an upper side (8) and/or lower side (9) of the structural element (2), and/or that the irrigation channel (12) is connected to the water channel is formed by a semi-circular gutter (13) in the structural element (2).

12. System according to one of the preceding claims,
**characterized in that**
the structural element (2) is or forms a facade module and/or facade element.

**Revendications**

1. Système (1) pour façades vertes (3) de préférence verticales, composé d'éléments de construction (2) constitués en tant que clinker ou pierre taillée, chaque élément de construction présentant un côté avant (4) avec un logement (5) pour un substrat de culture (6) et les éléments de construction (2) étant composés d'un matériau aspirant l'eau et perméable à l'eau, des canaux d'irrigation horizontaux et/ou verticaux qui s'étendent sur plusieurs éléments de construction voisins étant formés du matériau dans les éléments de construction, l'eau pouvant être acheminée aux éléments de construction via les canaux d'irrigation et pouvant être distribuée dans les éléments de construction, **caractèrisé** en ce que les canaux d'irrigation (11, 12) sont formés à travers le matériau pour l'irrigation indirecte des façades vertes (3), et les canaux d'irrigation (11, 12) étant formés par des alésages ou des évidements dans le matériau.

2. Système selon la revendication 1, **caractérisé en ce que** le système (1) forme un mur antibruit, un élément de façade et/ou un filtre à poussières fines ou respectivement un module d'absorption des poussières fines.

3. Système selon la revendication 1 ou 2, **caractérisé en ce que** le système (1) présente en haut un recouvrement (15) et/ou une rigole (16) pour l'acheminement d'eau aux canaux d'irrigation (11, 12).

4. Système selon l'une des revendications 1 à 3, **caractérisé en ce que** le système (1) est utilisé ou respectivement peut être utilisé pour la culture de plantes utiles, en particulier de légumes, d'herbes ou similaires et/ou en combinaison avec des méthodes d'agriculture urbaine.

5. Système selon l'une des revendications précédentes, **caractérisé en ce que** le matériau est minéral.

6. Système selon l'une des revendications précédentes, **caractérisé en ce que** le matériau est ou contient du silico-calcaire, de la brique, du béton poreux, de l'argile expansée, de la pierre ponce et/ou de la lave.

7. Système selon l'une des revendications précédentes, **caractérisé en ce que** le logement (5) est constitué en forme de poche ou de rigole et/ou est horizontal dans l'état d'utilisation.

8. Système selon l'une des revendications précédentes, **caractérisé en ce que** l'élément de construction (2) présente un contour extérieur au moins essentiellement parallélépipédique.

9. Système selon l'une des revendications précédentes, **caractérisé en ce qu'**au moins un ou le canal d'irrigation (11) est vertical dans l'état d'utilisation.

10. Système selon l'une des revendications précédentes, **caractérisé en ce que** l'élément de construction (2) présente ou forme au moins un canal d'irrigation (12) horizontal, le canal d'irrigation (12) horizontal raccordant plusieurs canaux d'irrigation (11) verticaux.

11. Système selon l'une des revendications précédentes, **caractérisé en ce qu'**un canal d'irrigation (12) est disposé ou formé sur un côté supérieur (8) et/ou un côté inférieur (9) de l'élément de construction (2), et/ou **en ce que** le canal d'irrigation (12) est formé d'une demi-rigole (13) dans l'élément de construction (2).

12. Système selon l'une des revendications précédentes, **caractérisé en ce que** l'élément de construction (2) est ou forme un module de façade et/ou un élément de façade.

Fig. 1

EP 2 904 895 B1

Fig. 2

Fig. 3

Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- CN 102726243 A
- US 20050044781 A1
- DE 3816866 A1
- JP 2003325052 A
- EP 2341187 A2